# EUROPÄISCHE PATENTSCHRIFT

(11) **EP 1 016 892 B1**
(45) Veröffentlichungstag und Bekanntmachung des Hinweises auf die Patenterteilung: **25.04.2007**
(21) Anmeldenummer: 99126014.2
(22) Anmeldetag: 27.12.1999
(51) Int. Cl.: G02F 1/13, H05K 5/06, H02B 1/28

(54) **Bildschirm**
Display screen
Ecran d'affichage

(30) Priorität: 28.12.1998 DE 19860383
(43) Veröffentlichungstag der Anmeldung: 05.07.2000
(73) Patentinhaber: BARTEC Componenten und Systeme GmbH, 97980 Bad Mergentheim (DE)
(72) Erfinder: Barlian, Reinhold, 97980 Bad Mergentheim (DE); Fischle, Martin, 97980 Bad Mergentheim (DE); Linström, Hans-Jürgen, Dr., 97990 Weikersheim (DE)

(56) Entgegenhaltungen:
- EP-A- 0 574 619
- DE-A- 2 624 562
- GB-A- 2 297 431
- US-A- 5 422 494

## Beschreibung

Die Erfindung betrifft einen Bildschirm mit den Merkmalen des Oberbegriffs des Anspruchs 1.

Die Aufgabe der Erfindung besteht darin, einen Bildschirm mit den Merkmalen des Oberbegriffs des Anspruchs 1 dahingehend weiterzubilden, daß eine Verwendung in explosionsgefährdeter Umgebung mit einfachen Mitteln, niedrigem Gewicht und großer Sichtfläche erzielt wird.

Diese Aufgabe wird erfindungsgemäß durch die Merkmale des Anspruchs 1 gelöst.

Zweckmäßige Ausgestaltungen und Weiterbildungen der Erfindung sind durch die Merkmale der Unteransprüche gekennzeichnet.

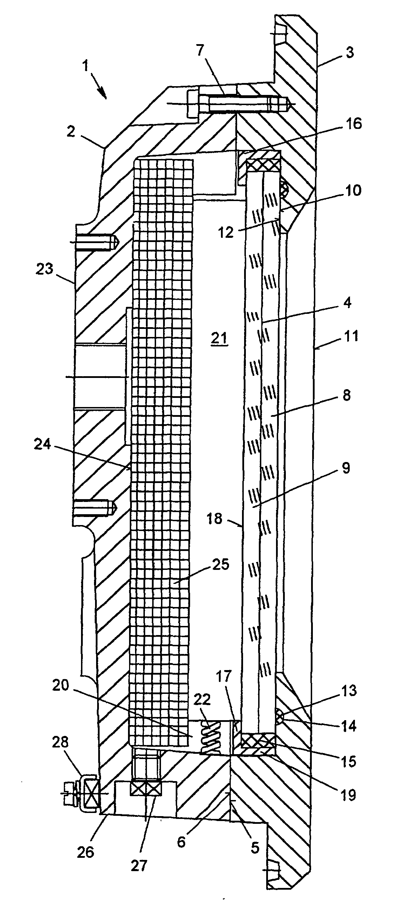

Weitere Vorteile und wesentliche Einzelheiten der Erfindung sind der nachfolgenden Beschreibung und der Zeichnung zu entnehmen, die in einer einzigen Figur in schematischer Darstellung eine bevorzugte Ausführungsform als Beispiel zeigt.

Aus dem Stand der Technik ist bereits eine in einem explosionsfesten Gehäuse eingeschlossene LCD-Anzeige bekannt (US 5 422 494 A).

Der in der Zeichnung dargestellte erfindungsgemäße Bildschirm weist ein im Sinne des Explosionsschutzes druckfestes Gehäuse 1 auf, das im wesentlichen aus einem Grundkörper 2, einem Rahmen 3 und einer Scheibe 4 gebildet ist. Der Grundkörper 2 besitzt eine dem Rahmen 3 zugewandte Anschlagfläche 5, an der eine Anschlagfläche 6 des Rahmens 3 anliegt. Die Spaltlängen und Spaltweiten zwischen den Anschlagflächen 5, 6 des Grundkörpers 2 und des Rahmens 3 sind so ausgeführt, daß sie den Vorschriften und Anforderungen des Explosionsschtzes in vollem Umfang genügen. Der feste Zusammenhalt des Grundkörpers 2 und des Rahmens 3 wird durch den Anforderungen entsprechende Verbindungsteile, bevorzugt Schrauben 7, gewährleistet.

Die den Anforderungen des Explosionsschutzes ebenfalls genügende Scheibe 4 ist als sogenannte Verbundscheibe ausgeführt und weist dazu mindestens zwei parallele Einzelscheiben 8, 9 auf. Die Scheibe 4 ist an dem Rahmen 3 befestigt, wobei ein Randbereich 10 der Außenseite 11 der äußeren Einzelscheibe 8 an einer Anlagefläche 12 des Rahmens 3 anliegt. Die zwischen dem Randbereich 10 und der Anlagefläche 12 bestehenden Spalte erfüllen hinsichtlich ihrer Spaltlänge und Spaltweite ebenfalls die Forderungen der Explosionsschutzvorschriften.

Außerdem ist zu erkennen, daß zwischen dem außenseitigen Randbereich 10 der Einzelscheibe 8 und dem Rahmen 3 eine Dichtung 13 vorgesehen ist, die zweckmäßig in einer in dem Rahmen 3 ausgebildeten Nut 14 gelagert ist. Ein weiteres Dichtungsmaterial 15 kann am stirnseitigen Umfang der Scheibe 4 angeordnet sein, wobei die Breite des Dichtungsmaterials 15 etwa gleich der Gesamtdicke der Scheibe 4 sein kann. Die Festlegung der Scheibe 4 an dem Rahmen 3 kann zweckmäßig über ein bevorzugt winkelförmiges Druckstück 16 mittels hier nicht dargestellten Halteschrauben erfolgen. Dabei kann ein Schenkel 17 des Druckstücks 16 die der Außenseite 11 gegenüberliegende Hinterseite 18 der Scheibe 4 übergreifen und ein weiterer Schenkel 19 des Druckstücks 16 kann das Dichtungsmaterial 15 am stirnseitigen Umfang der Scheibe 4 umfassen.

In dem von dem Grundkörper 2, dem Rahmen 3 und der Scheibe 4 begrenzten Raum 20 des druckfesten Gehäuses 1 befindet sich ein LCD-Display 21, das an die Hinterseite 18 der inneren Einzelscheibe 9 angrenzt. Das LCD-Display 21 kann über Druckfedern 22 gehalten sein, die bevorzugt am Umfang des LCD-Displays 21 angreifen und am Grundkörper 2 abgestützt sind.

Schließlich befindet sich in dem Raum 20 zwischen einer Rückwand 23 des Grundkörpers 2 und der Rückseite 24 des LCD-Displays 21 ein Explosionsdruckdämpfungsmaterial 25, das als in etwa flachrechteckförmiger Körper ausgeführt sein kann und an die Rückwand 23 angrenzt. Das Volumen des Explosionsdruckdämpfungsmaterials 25 kann etwa 30 bis 60 %, vorzugsweise ungefähr 45 % des Leervolumens des Raumes 20 betragen. Das Explosionsdruckdämpfungsmaterial 25 hat ein relativ geringes spezifisches Gewicht und weist eine Vielzahl querschnittskleiner, nicht geschlossener, sondern durchgehender Kanäle in Form von Poren und/oder Spalte auf. Diese kleinen durchgehenden Poren und Spalte dienen der Aufnahme eines eventuell im druckfesten Gehäuse 1 auftretenden Explosivgemisches und ihre lichte Weite ist so bemessen, daß sie kleiner ist als die jeweilige Grenzspaltweite des Explosionsgemisches.

An einer Seitenwand 26 des Grundkörpers 2 kann zudem eine Flammsperre 27 vorgesehen sein und außerdem kann der Grundkörper 2 einen PA-Anschluß 28 aufweisen.

Im Falle einer in dem Bildschirmgehäuse auftretenden Explosion wird das explosible Gemisch in der der Explosion vorangehenden Druckwelle hoch verdichtet. Dieses hoch verdichtete Explosivgemisch gelangt dabei zwangsläufig in die feinen Kanäle des Explosionsdruckdämpfungsmaterials 25, wo es auf Grund des kleinen Volumens der einzelnen Kanäle, Poren und Spalte mit einem ausgesprochen niedrigen zeitlichen Druckanstieg verbrennt oder gar unverbrannt bleibt. Das führt im Gesamtvolumen des Gehäuses 1 ebenfalls zu einem geringen zeitlichen Druckanstieg und letztlich zu einem sehr niedrigen Explosionsdruck, wobei der tatsächlich auftretende Bezugsdruck bis auf nur etwa 10 % desjenigen Bezugsdrucks gedämpft wird, der sonst in dem leeren Bildschirmgehäuse auftreten würde. Auf Grund dieser Maßnahmen kann das gesamte Bildschirmgehäuse deutlich dünnwandiger und somit wesentlich leichter ausgeführt werden. Das unbrennbare Explosionsdruckdämpfungsmaterial 25 kann aus Metall, Keramik, Schlackenwolle, Glas, Glaswolle oder dergleichen bestehen. Zweckmäßig kann der erfindungsgemäße Bildschirm mit dem Explosionsdruckdämpfungsmaterial 25 so ausgelegt werden, daß das druckfeste Gehäuse 1 trotz einer sehr leichtgewichtigen Ausführung dem vierfachen Wert des Bezugsdrucks standhält, so daß eine Einzelstückprüfung hinsichtlich der Druckfestigkeit nicht erforderlich ist.

## Patentansprüche

1. Bildschirm für ein EDV-System, mit einem eine durchsichtige Scheibe (4) aufweisenden Gehäuse (1), **dadurch gekennzeichnet, daß** in einem Raum (20) des Gehäuses (1) ein LCD-Display (21) und ein unbrennbares Explosionsdruckdämpfungsmaterial (25) angeordnet ist und daß das Gehäuse mit der Scheibe (4) als im Sinne des Explosionsschutzes druckfestes Gehäuse (1) ausgebildet ist.

2. Bildschirm nach vorstehendem Anspruch, **dadurch gekennzeichnet, daß** das Explosionsdruckdämpfungsmaterial (25) in dem Raum (20) des druckfesten Gehäuses (1) an der der Scheibe (4) gegenüberliegenden Rückseite (24) des LCD-Displays (21) angeordnet ist.

3. Bildschirm nach einem oder mehreren der vorstehenden Ansprüche, **dadurch gekennzeichnet, daß** das Explosionsdruckdämpfungsmaterial (25) durchgehende Poren und/oder Spalte für die Aufnahme eines Explosionsgemisches aufweist.

4. Bildschirm nach einem oder mehreren der vorstehenden Ansprüche, **dadurch gekennzeichnet, daß** die lichte Weite der Poren und Spalte in dem Explosionsdruckdämpfungsmaterial (25) kleiner ist als die jeweilige Grenzspaltweite für das Explosionsgemisch.

5. Bildschirm nach einem oder mehreren der vorstehenden Ansprüche, **dadurch gekennzeichnet, daß** das Volumen des Explosionsdruckdämpfungsmaterials (25) etwa 30 bis 60 Prozent, vorzugsweise etwa 45 Prozent des Leervolumens des Raumes (20) im druckfesten Gehäuse (1) ist.

6. Bildschirm nach einem oder mehreren der vorstehenden Ansprüche, **dadurch gekennzeichnet, daß** das druckfeste Gehäuse (1) einen Grundkörper (2) und einen Rahmen (3) aufweist, die mittels bevorzugt schraubbaren Verbindungsteilen (7) an aneinanderliegenden Anschlagflächen (5, 6) zusammengefügt sind.

7. Bildschirm nach einem oder mehreren der vorstehenden Ansprüche, **dadurch gekennzeichnet, daß** die Scheibe (4) eine aus mindestens zwei parallelen Einzelscheiben (8, 9) gebildete Verbundscheibe ist.

8. Bildschirm nach einem oder mehreren der vorstehenden Ansprüche, **dadurch gekennzeichnet, daß** ein Randbereich (10) der dem LCD-Display (21) abgewandten Außenseite (11) der Scheibe (4) an einer Anlagefläche (12) des Rahmens (3) anliegt.

9. Bildschirm nach einem oder mehreren der vorstehenden Ansprüche, **dadurch gekennzeichnet, daß** die Spaltlängen und -weiten zwischen den aneinanderliegenden Anschlagflächen (5, 6) des Grundkörpers (2) und des Rahmens (3) sowie der Scheibenaußenseite (11) und der Anlagefläche (12) des Rahmens (3) gemäß den Ex-Vorschriften ausgeführt sind.

10. Bildschirm nach einem oder mehreren der vorstehenden Ansprüche, **dadurch gekennzeichnet, daß** zwischen dem Rahmen (3) des druckfesten Gehäuses (1) und der Außenseite (11) der Scheibe (4) eine Dichtung (13) angeordnet ist.

11. Bildschirm nach einem oder mehreren der vorstehenden Ansprüche, **dadurch gekennzeichnet, daß** die Dichtung (13) in einer Nut (14) des Gehäuserahmens (3) gelagert ist.

12. Bildschirm nach einem oder mehreren der vorstehenden Ansprüche, **dadurch gekennzeichnet, daß** die Scheibe (4) an dem Rahmen (3) des druckfesten Gehäuses (1) über ein Druckstück (16) festgelegt ist, das die der Außenseite (11) gegenüberliegende Hinterseite (18) der Scheibe (4) übergreift.

13. Bildschirm nach einem oder mehreren der vorstehenden Ansprüche, **dadurch gekennzeichnet, daß** am stirnseitigen Umfang der Scheibe (4) ein Dichtungsmaterial (15) vorgesehen ist, das mindestens teilweise von einem Schenkel (19) des Druckstücks (16) übergriffen ist.

14. Bildschirm nach einem oder mehreren der vorstehenden Ansprüche, **dadurch gekennzeichnet, daß** das LCD-Display (21) über eine oder mehrere Federn (22) am Grundkörper (2) des druckfesten Gehäuses (1) abgestützt ist.

15. Bildschirm nach einem oder mehreren der vorstehenden Ansprüche, **dadurch gekennzeichnet, daß** das Explosionsdruckdämpfungsmaterial (25) an eine Rückwand (23) des Gehäusegrundkörpers (2) angrenzt.

16. Bildschirm nach einem oder mehreren der vorstehenden Ansprüche, **dadurch gekennzeichnet, daß** dem Grundkörper (2) des druckfesten Gehäuses (1) eine Flammsperre (27) zugeordnet ist.

## Claims

1. Monitor for an EDP system, with a housing (1) comprising a transparent disc (4), **characterised in that** an LCD display (21) and a non-combustible explosion pressure damping material (25) are located in one chamber (20) of the housing (1), and **in that** the housing is formed as an explosion protected pressure resistant housing (1) comprising the disc (4).

2. Monitor according to the preceding Claim, **characterised in that** the explosion pressure damping material (25) is located on the rear side (24) of the LCD display (21) located opposite the disc (4) in the chamber (20) of the pressure resistant housing (1).

3. Monitor according to one or both of the preceding Claims, **characterised in that** the explosion pressure damping material (25) comprises through pores and/or gaps for receiving an explosion mixture.

4. Monitor according to one or more of the preceding Claims, **characterised in that** the clear width of the pores and gaps in the explosion pressure damping material (25) is less than the relevant border gap width for the explosion mixture.

5. Monitor according to one or more of the preceding Claims, **characterised in that** the volume of the explosion pressure damping material (25) is approximately 30 to 60 percent, preferably approximately 45 percent of the empty volume of the chamber (20) in the pressure resistant housing (1).

6. Monitor according to one or more of the preceding Claims, **characterised in that** the pressure resistant housing (1) comprises a base body (2) and a frame (3), the same being assembled by means of preferably screwable connection components (7) via adjacent abutment surfaces (5, 6).

7. Monitor according to one or more of the preceding Claims, **characterised in that** the disc (4) is a compound disc formed from at least two parallel individual discs (8, 9).

8. Monitor according to one or more of the preceding Claims, **characterised in that** an edge area (10) of the outer side (11) of the disc (4) facing away from the LCD display (21) abuts against an abutment surface (12) of the frame (3).

9. Monitor according to one or more of the preceding Claims, **characterised in that** the gap lengths and widths between the adjacently positioned abutment surfaces (5, 6) of the base body (2) and the frame (3) as well as the outer disc side (11) and the abutment surface (12) of the frame (3) are designed according to EX regulations.

10. Monitor according to one or more of the preceding Claims, **characterised in that** a seal (13) is located between the frame (3) of the pressure resistant housing (1) and the outer side (11) of the disc (4).

11. Monitor according to one or more of the preceding Claims, **characterised in that** the seal (13) is positioned within a groove (14) of the housing frame (3).

12. Monitor according to one or more of the preceding Claims, **characterised in that** the disc (4) is affixed to the frame (3) of the pressure resistant housing (1) via a pressure piece (16), the same straddling the rear side (18) of the disc (4) opposite the outer side (11).

13. Monitor according to one or more of the preceding Claims, **characterised in that** a sealing material (15) is envisaged on the facing side circumference of the disc (4), the same being straddled at least in part by one leg (19) of the pressure piece (16).

14. Monitor according to one or more of the preceding Claims, **characterised in that** the LCD display (21) is supported on the base body (2) of the pressure resistant housing (1) by means of one or more springs (22).

15. Monitor according to one or more of the preceding Claims, **characterised in that** the explosion pressure damping material (25) borders onto a rear wall (23) of the housing base body (2).

16. Monitor according to one or more of the preceding Claims, **characterised in that** a flame barrier (27) is allocated to the base body (2) of the pressure resistant housing (1).

## Revendications

1. Ecran pour système informatique comportant un boîtier (1) présentant une vitre transparente (4),
**caractérisé en ce qu'**
un écran à cristaux liquides (21) et un matériau ininflammable d'atténuation de la pression d'explosion (25) sont mis en place dans une chambre (20) du boîtier (1) et le boîtier (1) avec la vitre (4) est conçu pour résister à la pression à des fins de protection anti-explosion.

2. Ecran selon la revendication précédente,
**caractérisé en ce que**
le matériau d'atténuation de la pression d'explosion (25) est disposé dans la chambre (20) du boîtier résistant à la pression (1), contre la face arrière (24) de l'écran à cristaux liquides (21) en regard de la vitre (4).

3. Ecran selon l'une ou plusieurs des revendications précédentes,
**caractérisé en ce que**
le matériau d'atténuation de la pression d'explosion (25) présente des pores traversants et/ou des fentes traversantes pour recevoir un mélange explosif.

4. Ecran selon l'une ou plusieurs des revendications précédentes,
**caractérisé en ce que**
la largeur intérieure des pores et des fentes du matériau d'atténuation de la pression d'explosion (25) est inférieure à l'interstice maximal de sécurité respectif du mélange explosif.

5. Ecran selon l'une ou plusieurs des revendications précédentes,
**caractérisé en ce que**
le volume du matériau d'atténuation de la pression d'explosion (25) représente environ 30 % à 60 % pour cent, de préférence environ 45 % du volume disponible de la chambre (20) du boîtier résistant à la pression (1).

6. Ecran selon l'une ou plusieurs des revendications précédentes,
**caractérisé en ce que**
le boîtier résistant à la pression (1) présente un corps principal (2) et un cadre (3) assemblés, de préférence au moyen de liaisons à vis (7) au niveau de leurs surfaces de butée adjacentes (5, 6).

7. Ecran selon l'une ou plusieurs des revendications précédentes,
**caractérisé en ce que**
la vitre (4) est une vitre composite formée d'au moins deux vitres distinctes parallèles (8, 9).

8. Ecran selon l'une ou plusieurs des revendications précédentes,
**caractérisé en ce qu'**
une bordure (10) de la face extérieure (11) de la vitre (4) à l'opposé de l'écran à cristaux liquides (21) est en contact avec une surface d'appui (12) du cadre (3).

9. Ecran selon l'une ou plusieurs des revendications précédentes,
**caractérisé en ce que**
les longueurs et les largeurs de fente entre les surfaces de butée adjacentes (5, 6) du corps principal (2) et du cadre (3) ainsi qu'entre la face extérieure (11) de la vitre et la surface d'appui (12) du cadre (3) correspondent aux prescriptions de protection anti-explosion.

10. Ecran selon l'une ou plusieurs des revendications précédentes,
**caractérisé en ce qu'**
un joint (13) est prévu entre le cadre (3) du boîtier résistant à la pression (1) et la face extérieure (11) de la vitre (4).

11. Ecran selon l'une ou plusieurs des revendications précédentes,
**caractérisé en ce que**
le joint (13) loge dans une rainure (14) du cadre du boîtier (3).

12. Ecran selon l'une ou plusieurs des revendications précédentes,
**caractérisé en ce que**
la vitre (4) est fixée sur le cadre (3) du boîtier résistant à la pression (1) par l'intermédiaire d'une pièce de compression (16) qui recouvre la face arrière (18) de la vitre (4) en regard de la face extérieure (11).

13. Ecran selon l'une ou plusieurs des revendications précédentes,
**caractérisé en ce que**
sur le pourtour frontal de la vitre (4), un matériau d'étanchéité (15) est recouvert au moins partiellement par un côté (19) de la pièce de compression (16).

14. Ecran selon l'une ou plusieurs des revendications précédentes,
**caractérisé en ce que**
l'écran à cristaux liquides (21) s'appuie sur le corps principal (2) du boîtier résistant à la pression (1) par l'intermédiaire d'un ou de plusieurs ressorts (22).

15. Ecran selon l'une ou plusieurs des revendications précédentes,
**caractérisé en ce que**
le matériau d'atténuation de la pression d'explosion (25) est contigu à une paroi arrière (23) du corps principal de boîtier (2).

16. Ecran selon l'une ou plusieurs des revendications précédentes,
**caractérisé en ce qu'**
un dispositif pare-flamme (27) est associé au corps principal (2) du boîtier résistant à la pression (1).
